Europäisches Patentamt

**(19)** European Patent Office

Office européen des brevets

**(11)** **EP 0 788 007 B1**

**(12)** **FASCICULE DE BREVET EUROPEEN**

**(45)** Date de publication et mention
de la délivrance du brevet:
**19.03.2003 Bulletin 2003/12**

**(51)** Int Cl.⁷: **G02B 26/08**, G02B 26/02,
G02B 26/06, G02B 5/08

**(21)** Numéro de dépôt: **97400105.9**

**(22)** Date de dépôt: **20.01.1997**

**(54)** **Miroir à coefficient de réflexion spatialement variable en amplitude et en phase**

Spiegel mit bezüglich Amplitude und Phase räumlich veränderbarem Reflexionskoeffizient

Mirror, the reflection coefficient of which is spatially variable in amplitude and phase

**(84)** Etats contractants désignés:
**DE FR GB**

**(30)** Priorité: **31.01.1996 RU 96101830**

**(43)** Date de publication de la demande:
**06.08.1997 Bulletin 1997/32**

**(73)** Titulaire: **COMPAGNIE INDUSTRIELLE DES
LASERS CILAS
F-91460 Marcoussis (FR)**

**(72)** Inventeurs:
  • **Apollonov, Victor Victorovitch
    Moscou (RU)**
  • **Acsinin, Vladimir, Ivanovitch
    Moscou (RU)**
  • **Egorov, Alexis Borissovitch
    Moscou (RU)**
  • **Kalachev, Yuri Lvovitch
    Moscou (RU)**
  • **Kiyko, Vadim Veniaminovitch
    Moscou Région (RU)**
  • **Kislov, Victor Ivanovitch
    Moscou (RU)**
  • **Prokhorov, Alexander Mihailovitch
    Moscou (RU)**
  • **Cornillault, Jean
    91620 Nozay (FR)**

**(74)** Mandataire: **Bonnetat, Christian
CABINET BONNETAT
29, rue de St. Pétersbourg
75008 Paris (FR)**

**(56)** Documents cités:
  **DE-A- 3 119 823        FR-A- 2 525 339
  US-A- 4 682 500**

  • **PATENT ABSTRACTS OF JAPAN vol. 010, no.
    364 (P-524), 5 décembre 1986 & JP 61 159613 A
    (KOKURITSU KOGAI KENKYUSHO), 19 juillet
    1986**
  • **PATENT ABSTRACTS OF JAPAN vol. 013, no.
    342 (P-908), 2 août 1989 & JP 01 101421 A
    (SHARP CORP), 19 avril 1989**

## EP 0 788 007 B1

**Description**

La présente invention concerne un miroir à coefficient de réflexion spatialement variable en amplitude et en phase.

On sait que, généralement, les propriétés de réflexion d'un miroir sont homogènes et qu'il est parfois nécessaire de modifier localement ces propriétés de réflexion, par exemple :

a) lorsqu'on désire corriger les perturbations locales de phase apportées par des variations d'indice de réfraction rencontrées sur le trajet des faisceaux lumineux ; ou,

b) lorsqu'on désire réduire l'intensité à la périphérie d'un faisceau laser, pour diminuer les phénomènes de diffraction et permettre d'obtenir une divergence plus faible ; ou bien encore,

c) lorsqu'on désire commander le coefficient de réflexion d'un miroir, pour l'accorder sur une longueur d'onde précise.

Le cas a) concerne les optiques actives ou adaptives et les solutions alors mises en oeuvre sont :

- un miroir constitué d'une lame réfléchissante, fixée sur sa périphérie et supportée par des pistons en matériau piézo-électrique. Suivant la tension appliquée à chaque piston, on peut déformer la lame réfléchissante. La forme de ce miroir peut donc être changée à volonté et en temps réel. Une onde lumineuse qui frappe ce miroir subit des variations de phase locales. En conjuguant ce miroir avec un système d'imagerie, on peut également déformer ou déplacer une image ; ou

- un miroir formé d'une membrane métallique d'un matériau piézoélectrique d'épaisseur comprise entre 0,5 et 1,5μ placée entre une électrode transparente déposée sur la surface d'une plaque en verre et un ensemble d'électrodes discrètes. La première électrode reçoit la tension de déplacement alors que les électrodes discrètes reçoivent les signaux de commande. Ce type de miroir permet aussi de contrôler localement la phase du faisceau réfléchi. Sa structure est complexe et nécessite la mise en oeuvre d'opérations technologiques exceptionnelles, ainsi que l'impossibilité d'utiliser ce miroir dans des lasers de grande puissance, car l'épaisseur des dépôts multi-diélectriques peut dépasser l'épaisseur de la membrane. Ceci affecterait la possibilité de commande de la membrane.

Pour traiter le cas b) ci-dessus, on utilise dans les cavités laser des miroirs à réflectivité variable. De tels miroirs de cavités laser à réflectivité variable peuvent être obtenus, de façon connue :

- en déposant des couches interférentielles dont l'épaisseur varie en fonction de la distance à l'axe. La loi de variation est fixe. Elle peut être du type gaussien ou même super gaussien. Ceci permet de diminuer l'intensité en bords de faisceau et donc de minimiser les phénomènes de diffraction. Par ce procédé, il est possible d'obtenir des faisceaux monomodes transverses beaucoup plus intenses qu'avec des miroirs à réflectivité constante. Ce dispositif est statique. Il ne peut pas être modifié, pour adapter la réflectivité à un fonctionnement laser constaté. Il faut noter que la réalisation de ces traitements multi-diélectriques est assez complexe ; ou bien,

- en plaçant un diaphragme circulaire entre les lames d'un miroir interférométrique du type Fabry-Pérot, dont une des lames est disposée sur un actionneur piézo-électrique, ce qui permet de modifier l'épaisseur de l'interféromètre. Avec ce type de miroir on réalise un profil en escalier du coefficient de réflexion. En dehors de l'ouverture du diaphragme, seule la première lame intervient : le coefficient de réflexion est celui de cette lame. A l'intérieur du diaphragme, on retrouve un étalon interférométrique d'épaisseur variable. Pour une longueur d'onde donnée, le coefficient de réflexion est fonction de l'épaisseur de l'interféromètre. Parmi les défauts d'un tel miroir, il convient essentiellement de noter le petit nombre de fonctions du coefficient de réflexion complexe qui sont réalisables, du fait du caractère discontinu (fonction échelon) de la caractéristique en amplitude et en phase. De plus, l'amplitude et la phase du coefficient de réflexion sont liées. Ceci ne permet pas, dans le cas général, de fournir un coefficient de réflexion avec une répartition donnée. Un autre défaut de ce miroir est l'impossibilité de l'utiliser dans les lasers de puissance, à cause de la faible tenue au flux du diaphragme, liée aux effets thermiques de bord.

Le document US 4 682 500 A divulgue un élément sensible à la pression comportant

- deux lames réfléchissantes, parallèles entre elles et écartées l'une de l'autre ; et
- des moyens pour déformer au moins l'une desdites lames réfléchissantes transversalement à son plan.

La présente invention concerne un miroir également proche d'un miroir interférométrique du type Fabry-Pérot, mais remédiant aux inconvénients du dernier des miroirs connus décrits ci-dessus.

A cette fin, selon l'invention, le miroir à coefficient de réflexion spatialement variable en amplitude et en phase comportant au moins deux lames réfléchissantes, parallèles entre elles et écartées l'une de l'autre, ainsi que des moyens pour déplacer l'une desdites lames parallèlement à elle-même pour faire varier la distance entre lesdites lames, est remarquable en ce qu'il comporte des moyens pour déformer au moins l'une desdites lames réfléchissantes transversalement à son plan.

Ainsi, grâce à la présente invention, on obtient un miroir dont on peut commander, en temps réel, le coefficient de réflexion complexe spatialement non uniforme. Ceci donne la possibilité de former un rayonnement réfléchi dont on peut commander la répartition de la phase et de l'amplitude.

On notera que lesdites lames réfléchissantes peuvent être partiellement ou hautement réfléchissantes.

Les déformations de l'une ou des deux lames, ainsi que la variation d'épaisseur du miroir peuvent être obtenues suivant des lois désirées.

En tant que miroir de résonateur laser, le miroir conforme à la présente invention permet d'augmenter la puissance du rayonnement émis et de diminuer sa divergence.

Lorsqu'il est utilisé dans des dispositifs de formation d'image, le miroir de l'invention permet d'améliorer le contraste et la finesse de l'image par une optimisation des caractéristiques amplitude/fréquence du système optique.

Par rapport aux systèmes connus, il présente une efficacité accrue, liée :

. à l'élargissement de la classe des fonctions réalisables : coefficient de réflexion complexe et non uniforme dans l'espace.

. à la possibilité de jouer d'une façon indépendante sur les répartitions spatiales des phases et des amplitudes.

Ce miroir est universel, puisqu'il permet d'optimiser les paramètres de la cavité pendant le fonctionnement du laser. Il ne nécessite pas une succession de mesures et de modifications de la fonction de correction, comme les autres, dans la mesure où le calcul préalable des paramètres d'un laser est, en règle générale, approximatif du fait de la complexité du laser en tant que système et de l'absence de modèles théoriques exacts.

Les mêmes avantages se retrouvent lors de l'utilisation de ce miroir dans des systèmes de formation d'image.

Sur le plan industriel, l'importance de la présente invention provient de ce que :

. le miroir conforme à la présente invention peut être utilisé non seulement dans des systèmes lasers ou de formation d'image en cours d'étude, mais également pour l'amélioration de systèmes existants. Il n'est pas nécessaire de faire subir des transformations importantes à un tel système existant, car il suffit de remplacer le miroir existant par le miroir de l'invention

. la production du miroir de l'invention ne pose pas de problème particulier. Il est facilement concevable de parvenir à une gamme restreinte de produits capable de couvrir presque toutes les applications.

Les figures du dessin annexé feront bien comprendre comment l'invention peut être réalisée. Sur ces figures, des références identiques désignent des éléments semblables.

La figure 1 est un schéma permettant d'illustrer le principe de la présente invention.

La figure 2 illustre schématiquement, en coupe axiale, un premier mode de réalisation du miroir conforme à la présente invention.

Les figures 3a et 3b illustrent respectivement la phase et l'amplitude du coefficient de réflexion du miroir de la figure 2.

La figure 4 montre schématiquement un second mode de réalisation du miroir conforme à l'invention.

La figure 5, montre en perspective, la répartition du coefficient de réflexion en amplitude du miroir de la figure 4.

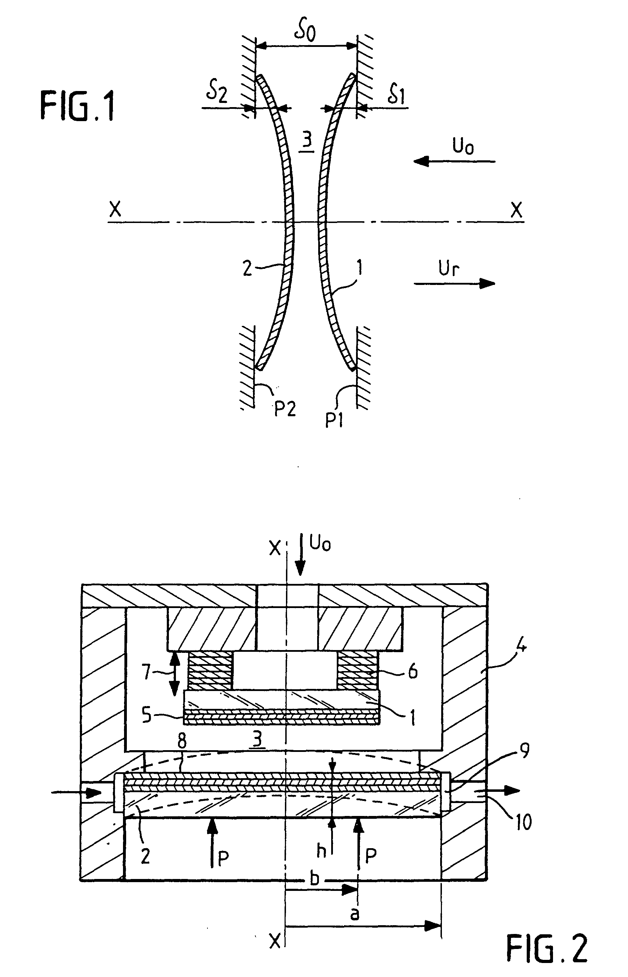

Sur la figure 1, on a représenté schématiquement et partiellement un étalon de Fabry-Pérot d'axe X-X comportant deux lames partiellement ou hautement réfléchissantes 1 et 2, de forme circulaire ou rectangulaire, ayant subi une déformation, orthogonalement à elles-mêmes. Ainsi, par rapport à leurs plans d'appui P1 et P2, lesdites lames 1 et 2 présentent une forme bombée (si lesdites lames 1 et 2 sont circulaires, leur forme bombée est celle d'un dôme ; si elles sont carrées ou rectangulaires, leur forme bombée est cylindrique).

Chaque point de l'étalon est défini par des coordonnées polaires r et $\varphi$ ,ayant pour origine l'intersection de l'axe optique X-X et d'un plan parallèle aux plans d'appui P1,P2. Ainsi, la distance, parallèlement à l'axe X-X, entre un point de la lame 1 et un point de la lame 2 est une fonction $\delta(r,\varphi)$ desdites coordonnées polaires r et $\varphi$. Si on appelle :

$\delta$o la distance fixe entre les plans d'appui P1 et P2 ;

$\delta$1 (r, $\varphi$) la distance variable de chaque point de la lame 1 par rapport au plan d'appui P1 ; et

$\delta$2 (r,$\varphi$) la distance variable de chaque point de la lame 2 par rapport au plan d'appui P2,

on peut écrire

$$\delta(r,\varphi) = \delta 1(r,\varphi) + \delta 2(r,\varphi) + \delta o.$$

Si une onde incidente $U_o$ arrive sur l'étalon du côté de la lame 1, la répartition en amplitude et en phase de l'onde réfléchie $U_r$ est une fonction qui dépend des caractéristiques de l'ensemble de l'étalon Fabry-Pérot, notamment de la forme des lames et de la distance les séparant.

On peut écrire :

$$U_r = U_o \text{ x } R(r,\varphi) \tag{1}$$

$R(r,\varphi)$ étant le coefficient de réflexion complexe, (c'est-à-dire comportant un terme imaginaire), dudit étalon Fabry-Pérot.

A partir des propriétés des interféromètres de Fabry-Pérot, on peut écrire :

$$R(r,\varphi)=e^{2ik\delta_1(r,\varphi)}[R_1 - T_1^{\,2}R_2\frac{e^{2ik\delta(r,\varphi)n}}{1-R_1R_2e^{2ik\delta(r,\varphi)n}}] \tag{2}$$

Dans cette relation (2), les paramètres non encore définis ont les significations suivantes :

$R_1$: coefficient de réflexion en amplitude de la lame 1
$R_2$: coefficient de réflexion en amplitude de la lame 2
$T_1$: coefficient de transmission en amplitude de la lame 1
$\lambda$ : longueur d'onde de l'onde incidente
$n$ : indice de réfraction du milieu 3 entre les lames 1 et 2
$k$ : nombre d'onde ; $k = 2\pi/\lambda$.

Ainsi, en n'importe quel point de l'étalon, pour une longueur d'onde donnée, le coefficient de réflexion complexe de celui-ci ne dépend que de ses caractéristiques $R_1, R_2, T_1$ et $n$ et des distances $\delta(r,\varphi)$ et $\delta_1(r,\varphi)$.

Par suite, on peut obtenir une relation d'amplitude et de phase désirée entre l'onde incidente $U_o$ et l'onde réfléchie $U_r$, en calculant de façon appropriée les profils des lames 1 et 2, ainsi que la distance les séparant, à partir des équations 1 et 2.

En chaque point de coordonnées r et $\varphi$, la distance $\delta(r,\varphi)$ entre les lames 1 et 2 est donnée par

$$\delta(r,\varphi) = \frac{1}{2kn}Arc\cos\left[\frac{(1+R_1R_2^2)(R_1^2-[R(r,\varphi)]^2)+T_1^2R_2^2(T_1^2+2R_1^2)}{2R_1R_2(R_1^2+T_1^2-[R(r,\varphi)]^2)}\right]$$

De plus, la forme de la surface de la lame 1 est donnée par :

$$\delta_1(r,\varphi) = \frac{1}{2k}\left[\phi_r(r,\varphi) - \arg(\frac{R_1-T_1^2R_2e^{2ik\delta(r,\varphi)n}}{1-R_1R_2e^{2ik\delta(r,\varphi)n}})\right]$$

De la relation (1) on déduit que la forme de la surface de la lame 2 est donnée par :

$$\delta_2(r,\varphi) = \delta(r,\varphi) - \delta_1(r,\varphi) - \delta_0$$

Dans ces équations, la signification des divers paramètres est la même que ci-dessus. De plus, la fonction $\phi_r(r,\varphi)$ est définie par l'expression $\exp(i\phi_r(r,\varphi))$ qui représente le coefficient de réflexion complexe $R(r/\varphi)$.

Dans l'exemple de réalisation du miroir, conforme à la présente invention, montré par la figure 2, les lames 1 et 2 sont des disques circulaires, montés dans une monture 4.

La lame 1, qui reçoit l'onde incidente $U_o$, est par exemple constituée par un disque de silice de 20 mm de diamètre et de 3 mm d'épaisseur. Sur sa face dirigée vers la lame 2, la lame 1 est revêtue d'un traitement multi-diélectrique partiellement ou hautement réfléchissant 5. Cette lame 1 est fixée à la monture 4 par l'intermédiaire d'un actionneur piézo-electrique annulaire 6, susceptible de déplacer ladite lame 1, parallèlement à elle-même le long de l'axe X-X (flèches 7). Le diamètre extérieur de l'actionneur 6 peut être de l'ordre de 23 mm, son diamètre intérieur étant alors égal à environ 13 mm.

La lame 2 est par exemple constituée par un disque de silice de 40 mm de diamètre et de 5 mm d'épaisseur. Sa face dirigée vers la lame 1 porte un revêtement 8 d'un traitement multi-diélectrique partiellement ou hautement réfléchissant et l'épaisseur totale de la lame 2 porte la référence $\underline{h}$.

Le bord circulaire périphérique de la lame 2 est encastré dans la monture 4 et celle-ci comporte une circulation d'eau 9,10 à la périphérie de ladite lame 2, pour stabiliser la température de l'ensemble. Le rayon de la lame 2, à l'intérieur de la monture 4 porte la référence $\underline{a}$.

L'espace 3 est rempli d'air.

Sur la face opposée à la lame 1, la lame 2 est soumise à un effort annulaire P (par exemple une pression fluide) de rayon $\underline{b}$, centré sur l'axe X-X.

Sous l'action de l'effort $\underline{P}$, la lame 2 se bombe en direction de la lame 1 et prend la forme représentée en tirets. Cette forme est alors définie par l'équation suivante :

$$\delta_2(r) = (\frac{P}{2\pi D})(b^2 + r^2)\ln(\frac{b}{a}) + (a^2 + r^2)(\frac{a^2 + r^2}{2a^2}) \tag{3}$$

avec:

$$D = \frac{Eh^3}{12(1-\nu)} \tag{4}$$

Dans ces expressions, E et $\nu$ sont respectivement le module d'Young et le coefficient de Poisson de la lame 2.

On remarquera que, puisque l'effort P est annulaire autour de l'axe X-X, la déformation de la lame 2 est elle-même de révolution autour dudit axe, de sorte que la coordonnée polaire $\varphi$ disparaît de l'expression (3). Par ailleurs, dans ce mode de réalisation, la lame 1 n'est soumise à aucune déformation et reste plate, de sorte $\delta_1(r,\varphi) = O$.

Le mode de réalisation de la figure 2 a été testé comme sélecteur de mode dans un laser de puissance à Nd: YAG, ayant une puissance continue de 400W.

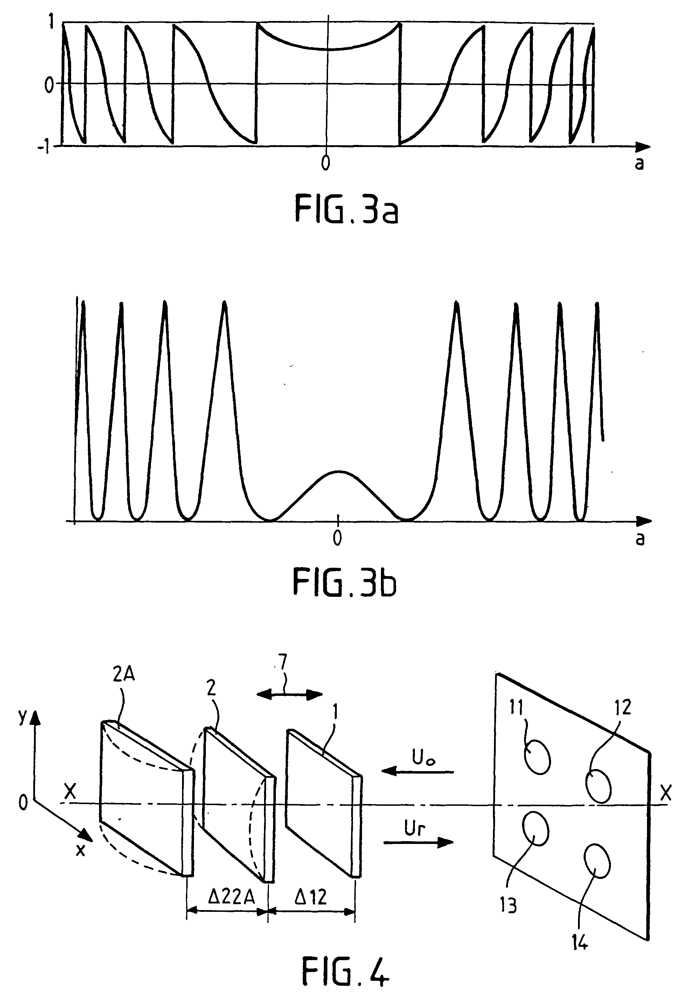

Les figures 3a et 3b illustrent en ordonnées, respectivement la phase et l'amplitude du coefficient de réflexion du miroir de la figure 2, le rayon dudit miroir étant porté en abscisses. On peut y voir que, grâce à ce miroir, on obtient une répartition du coefficient de réflextion sous la forme d'anneaux concentriques.

Les expérimentations effectuées ont montré qu'il était possible d'optimiser la réflectivité du miroir de la figure 2 de façon à diviser par 2 ou 3 la divergence du faisceau émis pour une diminution de la puissance de seulement 20 ou 30 %.

De ce qui précède, on comprendra que, à l'aide du miroir de la figure 1 à deux lames rectangulaires fixées le long de deux côtés opposés, et donc bombées en cylindre, il est facile d'obtenir une répartition du coefficient de réflexion sous la forme de bandes équidistantes. Pour obtenir un réseau de points réfléchissants, par exemple nécessaire pour un laser basé sur l'effet Talbot, on utilise un miroir à trois lames parallèles.

Sur la figure 4, on a représenté schématiquement un exemple de réalisation du miroir selon l'invention à trois lames partiellement ou hautement réfléchissantes 1, 2 et 2A.

Les trois lames 1, 2 et 2A sont de forme rectangulaire. La lame 1 peut être déplacée (flèches 7) parallèlement à l'axe X-X, tandis que les lames 2 et 2A peuvent être déformées (par exemple par une pression fluide) pour prendre des formes cylindriques (représentées en tirets). Les génératrices des formes cylindriques des deux lames 2 et 2A sont orthogonales.

Dans ce cas, la fonction du miroir est donnée par l'expression suivante :

$$U_r = U_0\left(\frac{R_1 - Je^{2ik\delta_1}}{1 - R_1 Je^{2ik\delta_1}}\right)$$

Avec:

$$J = \frac{R_2 - R_3 e^{2ik\delta_2}}{1 - R_2 R_3 e^{2ik\delta_2}}$$

$$\delta_1 = s_1 + \Delta_{12} \qquad \delta_2 = s_2 + \Delta_{22A}$$

$$s_1 = \alpha_x x + \alpha_y y \qquad s_2 = \beta_x x + \beta_y y$$

x et y sont les cordonnées du point courant du miroir dans les systèmes d'axes rectangulaires $O_{xy}$

$\Delta_{12}$ est la distance séparant les lames 1 et 2

$\Delta_{22A}$ est la distance séparant les lames 2 et 2A

$\alpha_x$ et $\alpha_y$ sont les angles d'inclinaison locaux de la lame 2 par rapport à la lame 1

$\beta_x$ et $\beta_y$ sont les angles d'inclinaison de la lame 2A par rapport à la lame 1.

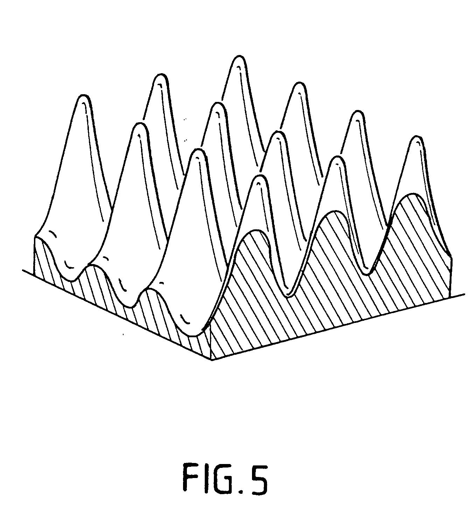

La répartition du coefficient de réflexion en amplitude est donnée par la figure 5.
Avec un tel miroir, on peut coupler quatre faisceaux laser indépendants (passant par des ouvertures 11 à 14) pour obtenir un faisceau unique.

## Revendications

1. Miroir à coefficient de réflexion spatialement variable en amplitude et en phase comportant au moins deux lames réfléchissantes (1,2), parallèles entre elles et écartées l'une de l'autre, ainsi que des moyens pour déplacer l'une desdites lames parallèlement à elle-même pour faire varier la distance entre lesdites lames, **caractérisé en ce qu'**il comporte des moyens pour déformer au moins l'une desdites lames hautement réfléchissantes (1,2) transversalement à son plan.

2. Miroir selon la revendication 1, **caractérisé en ce que** la déformation de la ou des lame(s) est telle que la distance $\delta(r,\varphi)$ entre lesdites lames est une fonction des coordonnées polaires (r et $\varphi$) du point courant du miroir selon l'expression :

$$\delta(r,\varphi) = \frac{1}{2kn} Arc\cos\left[\frac{(1+R_1R_2^2)(R_1^2-[R(r,\varphi)]^2)+T_1^2R_2^2(T_1^2+2R_1^2)}{2R_1R_2(R_1^2+T_1^2-[R(r,\varphi)]^2)}\right]$$

dans laquelle :

> r et $\varphi$ sont les coordonnées polaires du point courant de la surface du miroir dans un système de coordonnées polaires dont le centre est situé sur l'axe optique dudit miroir
>
> k est le nombre d'onde égal à $2\pi/\lambda$, $\lambda$ étant la longueur d'onde
>
> n est l'indice de réfraction du milieu (3) entre lesdites lames
>
> $R_1$ est le coefficient de réflexion en amplitude de la première desdites lames (1) rencontrée par une onde incidente ($U_o$)
>
> $R_2$ est le coefficient de réflexion en amplitude de la deuxième desdites lames (2) rencontrée par ladite onde incidente ($U_o$)
>
> $T_1$ est le coefficient de transmission en amplitude de la ladite première lame (1)
>
> $T_2$ est le coefficient de transmission en amplitude de ladite deuxième lame (2).

3. Miroir selon la revendication 2,
   **caractérisé en ce que** la forme de la surface d'une lame (1) déformée est donnée par l'expression

$$\delta_1(r,\varphi) = \frac{1}{2k}\left[\phi_r(r,\varphi) - \arg\left(\frac{R_1-T_1^2R_2e^{2ik\delta(r,\varphi)n}}{1-R_1R_2e^{2ik\delta(r,\varphi)n}}\right)\right]$$

la forme de la surface de l'autre lame (2) étant donnée par

$$\delta_2(r,\varphi)=\delta(r,\varphi)-\delta_1(r,\varphi)-\delta_0$$

expression dans lesquelles

> $\delta_o$ est la distance fixe séparant les deux lames,
>
> $\delta_1(r,\varphi)$ est la distance séparant le point courant de ladite lame déformée (1) du plan d'appui de celle-ci,
>
> $\delta_2(r,\varphi)$ est la distance séparant le point courant de ladite autre lame (2) du plan d'appui de cette dernière, et
>
> $\phi_r(r,\varphi)$ est défini par le coefficient de réflexion complexe du miroir $\exp(i\phi_r(r,\varphi))$.

4. Miroir selon l'une des revendications 1 à 3, **caractérisé en ce que** lesdites lames ont la forme de disques et **en ce que** celle ou celles qui subissent l'action desdits moyens de déformation se déforment en dôme.

5. Miroir selon l'une des revendications 1 à 3, **caractérisé en ce que** lesdites lames ont une forme carrée ou rectangulaire et **en ce que** celle ou celles qui subissent l'action desdits moyens de déformation prennent une forme cylindrique.

6. Miroir selon l'une des revendications 1 à 5, **caractérisé en ce que** lesdits moyens de déformation sont constitués par un fluide sous pression.

7. Miroir selon l'une des revendications 1 à 6, **caractérisé en ce qu'**il comporte trois lames réfléchissantes, parallèles entre elles et deux à deux écartées les unes des autres et **en ce que** lesdits moyens de déformation déforment deux desdites lames.

8. Miroir selon la revendication 7, dans lequel lesdites lames sont carrées ou rectangulaires et se déforment cylindriquement,
**caractérisé en ce que** les génératrices de la surface cylindrique formée par l'une desdites lames déformées sont orthogonales aux génératrices de la surface cylindrique formée par l'autre desdites lames déformées.

**Patentansprüche**

1. Spiegel mit bezüglich Amplitude und Phase räumlich veränderbarem Reflexionskoeffizient, umfassend zumindest zwei reflektierende Platten (1, 2), untereinander parallel und voneinander getrennt, sowie Mittel um eine der Platten parallel zu verschieben, um den Abstand zwischen den Platten verändern zu können, **dadurch gekennzeichnet, dass** der Spiegel Mittel umfasst, um zumindest eine der hochreflektierenden Platten (1, 2) quer zu ihrer Ebene zu verformen.

2. Spiegel nach Anspruch 1, **dadurch gekennzeichnet, dass** die Verformung der Platte(n) derart ist, dass der Abstand $\delta(r,\varphi)$ zwischen den Platten eine Funktion von Polarkoordinaten ($r$ und $\varphi$) des Durchgangspunkts des Spiegels gemäß dem Ausdruck:

$$\delta(r,\varphi) = \frac{1}{2\,kn}\,Arc\,\cos\left[\frac{(1+R_1 R_2{}^2)(R_1^2 - [R(r,\varphi)]^2) + T_1^2 R_2^2(T_1^2 + 2R_1^2)}{2\,R_1\,R_2(R_1^2 + T_1^2 - [R(r,\varphi)]^2)}\right]$$

ist, in dem:

$r$ und $\varphi$ die Polarkoordinaten des Durchgangspunkts der Fläche des Spiegels in einem Polarkoordinaten-System sind, dessen Zentrum auf der optischen Achse des Spiegels liegt,

$k$ die Wellenzahl gleich $2\pi/\lambda$ ist, worin $\lambda$ die Wellenlänge ist,

$n$ der mittlere Brechungsindex (3) zwischen den Platten ist,

$R_1$ der auf die Amplitude bezogene Reflexionskoeffizient der ersten Platte (1) ist, die durch eine einfallende Welle ($U_o$) getroffen wird,

$R_2$ der auf die Amplitude bezogene Reflexionskoeffizient der zweiten Platte (2) ist, die durch die einfallende Welle ($U_o$) getroffen wird,

$T_1$ der Transmissionskoeffizient mit Amplitude der ersten Platte (1) ist und

$T_2$ der Transmissionskoeffizient mit Amplitude der zweiten Platte (2) ist.

3. Spiegel nach Anspruch 2, **dadurch gekennzeichnet, dass** die Form der Fläche einer verformten Platte (1) bestimmt ist durch den Ausdruck

$$\delta_1(r,\varphi) = \frac{1}{2\,k}\left[\phi_r(r,\varphi) - \arg\left(\frac{R_1 - T_1^2 R_2 e^{2ik\delta(r,\varphi)n}}{1 - R_1 R_2 e^{2ik\delta(r,\varphi)n}}\right)\right],$$

und die Form der Fläche der anderen Platte (2) bestimmt wird durch den Ausdruck

$$\delta_2(r,\varphi) = \delta(r,\varphi) - \delta_1(r,\varphi) - \delta_0,$$

in dem

$\delta_0$ der feste Abstand ist, der die zwei Platten trennt,

$\delta_1(r,\varphi)$ der Abstand ist, der den Durchgangspunkt der verformten Platte (1) von der Halteebene dieser trennt,

$\delta_2(r,\varphi)$ der Abstand ist, der den Durchgangspunkt der anderen Platte (2) von der Halteebene dieser Letzteren trennt, und

$\phi_r(r,\varphi)$ bestimmt ist durch den komplexen Reflexionskoeffizient $\exp(i\phi_r(r, \varphi))$ des Spiegels.

4. Spiegel nach einem der Ansprüche 1 bis 3, **dadurch gekennzeichnet, dass** die Platten die Form von runden Scheiben haben und dass sich diese unter der Wirkung der Verformungsmittel zu einer Kuppel verformen.

5. Spiegel nach einem der Ansprüche 1 bis 3, **dadurch gekennzeichnet, dass** die Platten eine quadratische oder rechteckig Form haben und dass diese unter der Wirkung der Verformungsmittel eine zylindrische Form annehmen.

6. Spiegel nach einem der Ansprüche 1 bis 5, **dadurch gekennzeichnet, dass** die verformungsmittel durch ein Fluid unter Druck gebildet werden.

7. Spiegel nach einem der Ansprüche 1 bis 6, **dadurch gekennzeichnet, dass** er drei reflektierende Platten umfasst, untereinander parallel und je zwei voneinander getrennt und dass die Verformungsmittel zwei Platten verformen.

8. Spiegel nach Anspruch 7, in dem die Platten quadratisch oder rechteckig sind und sich zylindrisch verformen, **dadurch gekennzeichnet, dass** die Mantellinien der zylindrischen Fläche, die durch eine der verformten Platten gebildet wird, orthogonal sind zu den Mantellinien der zylindrischen Fläche, die durch die andere der verformten Platten gebildet wird.

## Claims

1. A mirror having a reflection coefficient that is spatially variable in amplitude and in phase and includes at least two parallel spaced reflecting plates (1, 2), means for displacing one of said plates parallel to itself to vary the distance between said plates, **characterized in that** it includes means for deforming at least one of said highly reflecting plates (1, 2) transversely to its plane.

2. A mirror according to claim 1 **characterized in that** the deformation of the plate(s) is such that the distance $\delta(r,\varphi)$ between said plates is a function of the polar coordinates ($\underline{r}$ and $\varphi$) of the current point of the mirror defined by the equation:

$$\delta(r,\varphi) = \frac{1}{2kn} Arc\cos\left[\frac{(1+R_1 R_2^2)(R_1^2 - [R(r,\varphi)]^2) + T_1^2 R_2^2 (T_1^2 + 2R_1^2)}{2R_1 R_2 (R_1^2 + T_1^2 - [R(r,\varphi)]^2)}\right]$$

in which:

$\underline{r}$ and $\varphi$ are the polar coordinates of the current point of the surface of the mirror in a system of polar coordinates concentric with the optical axis of said mirror,

$\underline{k}$ is the wave number equal to $2\pi/\lambda$ where $\lambda$ is the wavelength,

$\underline{n}$ is the refractive index of the medium (3) between said plates,

$R_1$ is the amplitude reflection coefficient of the first plate (1) encountered by an incident beam ($U_o$),

$R_2$ is the amplitude reflection coefficient of the second plate (2) encountered by said incident beam ($U_o$),

$T_1$ is the amplitude transmission coefficient of said first plate (1), and

$T_2$ is the amplitude transmission coefficient of said second plate (2).

3. A mirror according to claim 2 **characterized in that** the shape of the surface of a deformed plate (1) is given by the equation:

$$\delta_1(r,\varphi) = \frac{1}{2k}\left[\phi_r(r,\varphi) - \arg\left(\frac{R_1 - T_1^2 R_2 e^{2ik\delta(r,\varphi)n}}{1 - R_1 R_2 e^{2ik\delta(r,\varphi)n}}\right)\right]$$

and the shape of the surface of the other plate (2) is given by the equation:

$$\delta_2(r,\varphi) = \delta(r,\varphi) - \delta_1(r,\varphi) - \delta_0$$

in which:

$\delta_0$ is the fixed distance between the two plates,
$\delta_1(r,\varphi)$ is the distance between the current point of said deformed plate (1) and the bearing plane thereof,
$\delta_2(r,\varphi)$ is the distance between the current point of said other plate (2) and the bearing plane thereof, and
$\delta_r(r,\varphi)$ is defined by the complex reflection coefficient of the mirror $\exp(i\phi_r(r,\varphi))$.

4. A mirror according to any of claims 1 to 3 **characterized in that** said plates are disc shape and are deformed by said deformation means into a dome shape.

5. A mirror according to any of claims 1 to 3 **characterized in that** said plates have a square or rectangular shape and are deformed by said deformation means into a cylindrical shape.

6. A mirror according to any of claims 1 to 5
**characterized in that** said deformation means comprise a fluid under pressure.

7. A mirror according to any of claims 1 to 6 **characterized in that** it comprises three parallel reflecting plates spaced from each other in pairs and **in that** said deformation means deform two of said plates.

8. A mirror according to claim 7 wherein said plates have a square or rectangular shape and are deformed into a cylindrical shape, **characterized in that** the generatrices of the cylindrical surface formed by one of said deformed plates are orthogonal to the generatrices of the cylindrical surface formed by the other of said deformed plates.

FIG.1

FIG.2

FIG.3a

FIG.3b

FIG.4

FIG.5